# EUROPEAN PATENT APPLICATION

(11) **EP 4 835 261 A1**
(43) Date of publication of application: **04.11.2026**
(21) Application number: 26174874.3
(22) Date of filing: 27.04.2026
(51) Int. Cl.: F01D 21/00, F01D 17/02, F01D 17/20, G01B 7/02, G01B 21/16

(54) **APPARATUS AND METHOD FOR REMOTE PROXIMITY MEASUREMENT**

(30) Priority: 25.04.2025 US 202519190420
(71) Applicant: RTX Corporation, Farmington, CT 06032 (US)
(72) Inventor: HUDSON, Ian A., Windsor, 06095 (US); HACKETT, Bryan J., Berlin, 06037 (US)
(74) Representative: Dehns

(57) **Abstract**

An apparatus for performing remote proximity measurements includes a follower mechanism (202) that is configured to mechanically transmit motion of an engine component (204) from a first location associated with the engine component (204) to a second location remotely located from the first location and provide an indication of the motion of the engine component (204) at the second location. A proximity probe (218) associated with the second location is configured to detect the indication of the motion of the engine component (204) at the second location.

## Description

### TECHNICAL FIELD

This invention relates generally to proximity measurements within a gas turbine engine. More specifically, this invention relates to providing a remote proximity measurement within a gas turbine engine.

### BACKGROUND

Proximity measurements within gas turbine engines can be useful in identifying relative motion of various engine components within the gas turbine engine. Proximity measurements can be used for gapping verification, vibratory response monitoring and thermally driven response measurements and many other measurements. Installation of a proximity probe within a gas turbine engine requires designing around or modifying the existing gas turbine engine in order to provide the ability to place the proximity probe within the gas turbine engine structure. In either case, there may be many follow-on effects to parts to provide the measurement of interest. In some cases, allowable space within a gas turbine engine is limited and because a proximity probe's range scales with size there are limitations to the amount of relative motion that can be measured. Further compounding this issue are installations that do not allow for mechanical verification of the starting gap and probe face to target. All of these factors increase the risk to the measurements and cause problems obtaining the measurements.

### SUMMARY

This invention relates to remote proximity measurements within an engine.

According to an aspect of the present invention, there is provided an apparatus for performing remote proximity measurements comprising:
a follower mechanism configured to:
   mechanically transmit motion of an engine component from a first location associated with the engine component to a second location remotely located from the first location; and
   provide an indication of the motion of the engine component at the second location; and
a proximity probe associated with the second location configured to detect the indication of the motion of the engine component at the second location.

Optionally, and in accordance with the above, the follower mechanism comprises:
an elongated member having a first end interfacing with the engine component at the first location and a second end associated with the second location; and
a measuring component connected to a second end of the elongated member configured to define at least one surface detectable by the proximity probe.

Optionally, and in accordance with any of the above, the apparatus further comprises:
a thermocouple associated with the elongated member configured to detect temperature; and
a controller in signal communication with the proximity probe and the thermocouple, the controller configured to compensate for changes in length of the elongated member due to changes in temperature as detected by the thermocouple.

Optionally, and in accordance with any of the above, the measuring component comprises a plate having the at least one surface detectable by the proximity probe, the at least one surface facing away from the elongated member and perpendicular to a longitudinal axis of the elongated member.

Optionally, and in accordance with any of the above, the measuring component comprises a sloped surface on at least one side thereof, the sloped surface comprising the at least one surface detectable by the proximity probe, the sloped surface being sloped relative to a longitudinal axis of the elongated member.

Optionally, and in accordance with any of the above, the follower mechanism further comprises a housing, the housing defining an interior channel through which the elongated member is configured to move, the housing further defining an opening configured to receive the proximity probe.

Optionally, and in accordance with any of the above, the follower mechanism comprises a biasing mechanism configured to bias the pushrod to remain in contact with the engine component.

According to another aspect of the present invention, there is provided a method for performing remote proximity measurements comprising:
mechanically transmitting motion of an engine component from a first location associated with the engine component to a second location remotely located from the first location using a follower mechanism;
providing an indication of motion of the engine component at the second location; and
detecting the indication of the motion of the engine component at the second location using a proximity probe.

Optionally, and in accordance with any of the above, the step of mechanically transmitting further comprises:
providing the indication of the motion of the engine component at the second location using a pushrod; and
biasing the pushrod to remain in contact with the engine component using a biasing mechanism.

Optionally, and in accordance with any of the above, the step of mechanically transmitting the motion of the engine component further comprises interfacing with the engine component at the first location using a first end of an elongated member, the elongated member having a second end associated with the second location.

Optionally, and in accordance with any of the above, the step of detecting further comprises detecting a measuring component connected to the second end of the elongated member, the measuring component defining at least one surface detectable by the proximity probe.

Optionally, and in accordance with any of the above, the measuring component comprises a plate and the step of detecting further comprises detecting movement of the plate parallel to the elongated member, the plate having the at least one surface detectable by the proximity probe facing away from the elongated member and perpendicular to a longitudinal axis of the elongated member.

Optionally, and in accordance with any of the above, the step of detecting further comprises detecting movement of a sloped surface on the measuring component, the sloped surface being sloped relative to a longitudinal axis of the elongated member.

Optionally, and in accordance with any of the above, the method further comprises mounting the follower mechanism to a gas turbine engine case using a housing surrounding the follower mechanism, the housing defining an interior channel through which the follower mechanism may move.

Optionally, and in accordance with any of the above, the engine component is located within the gas turbine engine case and the proximity probe is located outside of the gas turbine engine case.

According to another aspect of the present invention, there is provided a system for performing remote proximity measurements comprising:
the apparatus of any of the above or of claims 1 to 7; and
a gas turbine engine including an engine component at the first location, the follower mechanism associated with the gas turbine engine.

Optionally, and in accordance with any of the above,:
the gas turbine engine includes an engine case within which the engine component is located; and
the proximity probe is located outside of the engine case.

Optionally, and in accordance with any of the above, the follower mechanism is inserted into the gas turbine engine through a borescope probe hole.

Other technical features may be readily apparent to one skilled in the art from the following figures, descriptions, and claims.

### BRIEF DESCRIPTION OF THE DRAWINGS

For a more complete understanding of this invention and its advantages, reference is now made to the following description taken in conjunction with the accompanying drawings, in which like reference numerals represent like parts:
FIGURE 1 illustrates a system for remotely measuring proximity within an engine;
FIGURE 2 illustrates a mechanical follower assembly with a proximity probe for taking proximity measurements;
FIGURE 3 illustrates the proximity probe of FIGURE 2 and a measurement plate;
FIGURE 4 illustrates a mechanical follower assembly and proximity probe used with a rotor and blade assembly of a gas turbine engine;
FIGURE 5 illustrates a side view of one embodiment of the mechanical follower assembly and proximity probe;
FIGURE 6 illustrates a cross sectional side view of the embodiment of FIGURE 5; and
FIGURE 7 illustrates a flow diagram of the operation of the mechanical follower assembly and proximity probe for measuring movement of components within an engine.

### DETAILED DESCRIPTION

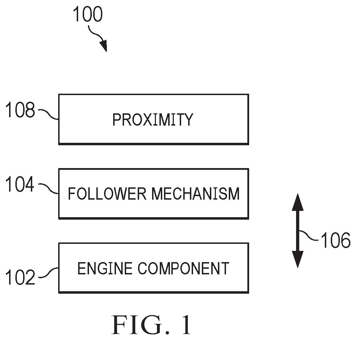

FIGURES 1 through 7, described below, and the various embodiments used to describe the principles of the present invention are by way of illustration only and should not be construed in any way to limit the scope of this invention. Those skilled in the art will understand that the principles of the present invention may be implemented in any type of suitably arranged device or system.

FIGURE 1 illustrates a block diagram of a system 100 for providing remote proximity measurements of an engine component 102. A follower mechanism 104 is placed in close proximity to the engine component 102 to detect movement in the engine component 102 towards or away from the follower mechanism 104 as indicated generally by arrow 106. As the engine component 102 moves toward and away from the follower mechanism 104, the follower mechanism 104 will mimic the movement of the engine component 102. The follower mechanism 104 is maintained in constant contact with the engine component 102 in order to detect the movement of the engine component 102. The follower mechanism 104 may be maintained in contact with the engine component 102 using a variety of implementations including a spring/wave washer or solenoid to maintain the contact. The follower mechanism 104 comprises a structure that transmits displacement of the engine component 102 to a remote position where this movement may be detected by a proximity probe 108.

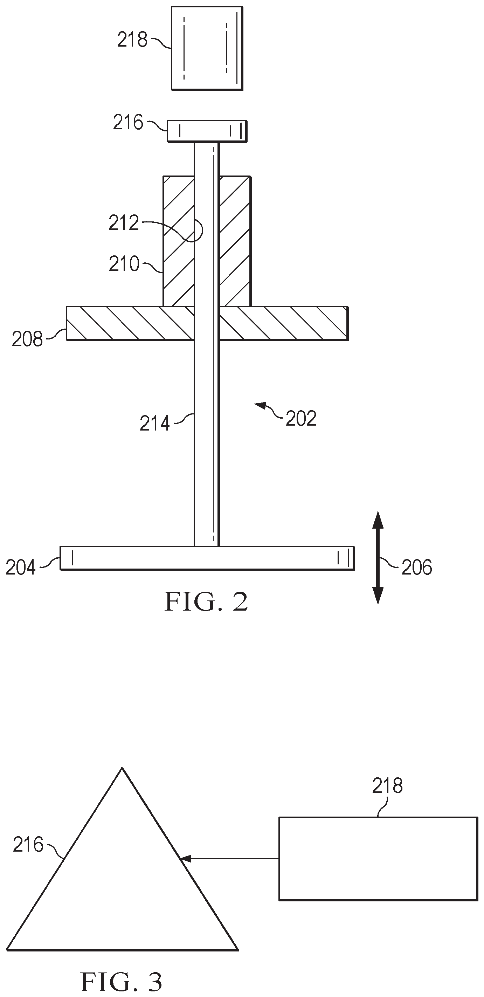

Referring now to FIGURE 2, there is illustrated an implementation wherein the follower mechanism 104 comprises a mechanical pushrod 202. The mechanical pushrod 202 is in contact with an engine component 204 which may comprise any engine component 204 that may move toward and away from the mechanical pushrod 202 in the direction indicated generally by arrow 206. The interface between the mechanical pushrod 202 and the engine component 204 may provide either a static target or dynamic target connection and may implement a wear couple design in order to facilitate movement of the engine component 204 past the base of the mechanical pushrod 202.

The mechanical pushrod 202 is inserted through an opening in the case 208 of the gas turbine engine in order to place the base of the mechanical pushrod 202 either touching or in close proximity to the engine component 204. The mechanical pushrod 202 is held in place with respect to the case 208 of the gas turbine engine using a housing 210 that connects the mechanical pushrod 202 to the casing 208 of the gas turbine engine. The mechanical pushrod 202 passes through an opening 212 defined within the interior of the housing 210.

Mechanical pushrod 202 includes an elongated member 214 that extends between the engine component 204 and a measurement plate 216 located on an end of the elongated member that is opposite the end of the elongated member interfacing with the engine component 204. The measurement plate 216 will have a sufficient size and configuration such that movement of the measurement plate 216 toward and away from the proximity probe 218 may be detected. Considerations can be made with respect to the effect of thermal conditions on measurements of movement of the mechanical pushrod 202. For example, there may occur elongation of the elongated member 214 at higher than ambient temperature conditions. Additionally, the case/mount structure of the housing 210 may be subject to thermal expansion causing changes in the measurement of the mechanical pushrod 202. The mechanical pushrod 202 can also incorporate binary positioning features to allow for a stored state of the mechanical pushrod when no measurements are being taken and an active state of the mechanical pushrod when measurements are being taken.

While FIGURE 2 illustrates the proximity probe 218 being positioned above the mechanical pushrod 202 along the central axis of the mechanical pushrod, it will be appreciated that the proximity probe 218 could be located to the side of the mechanical pushrod 202, and the measurement plate 216 could have a configuration that enables detection of movement of the mechanical pushrod 202 from the side thereof. In this case, the measurement plate 216 could comprise for example a sloped surface such that movement of the sloped surface past the proximity probe at 218 could be detected based upon the distance of the sloped surface from the proximity probe 218 at any particular point in time. This is more particularly illustrated in FIGURE 3, which shows the measurement plate 216 and the proximity probe 218.

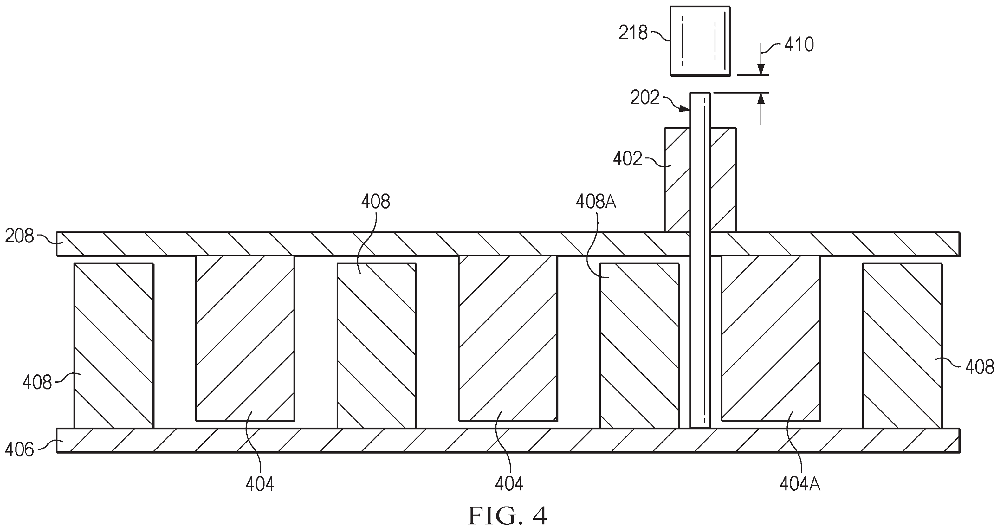

Referring now to FIGURE 4, there is illustrated the mechanical pushrod 202 installed within a borescope port 402 of an engine casing 208 having vanes 404 installed thereon. The mechanical pushrod 202 is inserted through the borescope port 402 to come into contact with a rotor 406 having a plurality of blade assemblies 408 installed thereon. The rotor 406 and blade assemblies 408 will rotate out of the page such that the mechanical pushrod 202 will remain between the vane 404A attached to the case 208 of the gas turbine engine and the blade assembly 408A associated with the rotor 406.

The mechanical pushrod 202 will run along the surface of the rotor 406 as the rotor rotates past the mechanical pushrod 202. The proximity probe 218 will measure a gap 410 between the top end of the mechanical pushrod 202 and the proximity probe 218. Movements in the rotor 406 may be detected by increases or decreases in the gap 410 measured by the proximity probe 218. As noted previously, features may be incorporated into the end of the mechanical pushrod 202 interfaced with the rotor 406 in order to reduce friction between the mechanical pushrod 202 and the rotor 406. While the embodiment of FIGURE 4 has illustrated the use of a borescope port 402 for inserting the mechanical pushrod 202 within the interior of the case 208 of the gas turbine engine, it will be appreciated that other types of openings and design implementations may be used to insert the mechanical pushrod 202 into a desired location within the gas turbine engine through the case 208.

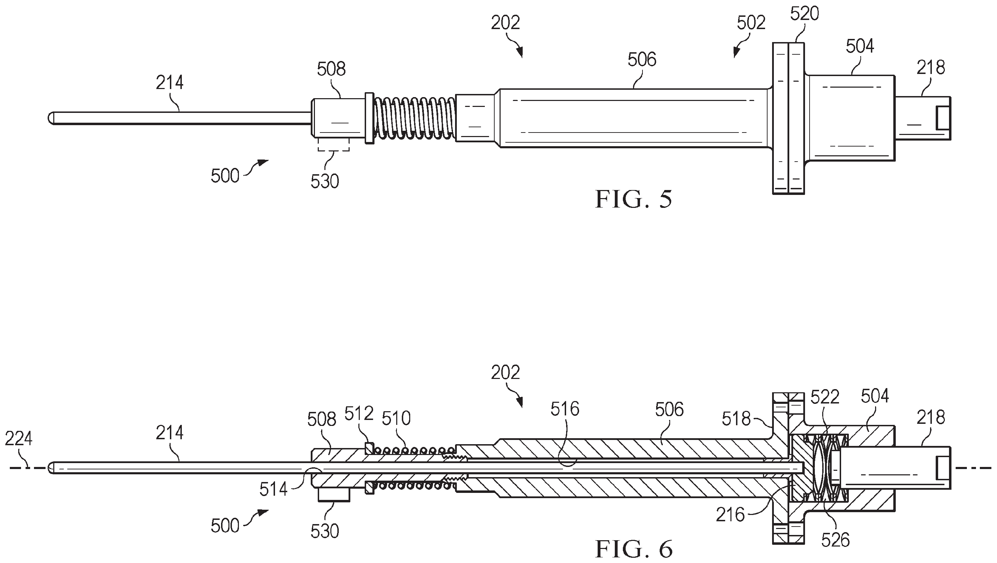

Referring now to FIGURES 5 and 6, there is illustrated a side view (FIGURE 5) and a cross-sectional side view (FIGURE 6) of the mechanical follower assembly 500. The mechanical follower assembly 500 includes the elongated member 214 and the measurement plate 216. The measurement plate 216 is connected to a first end of the elongated member 214 while the second end of the elongated member is configured to interact with the engine component 204 (not shown) whose movement is being detected and measured. The mechanical follower assembly 500 includes a housing 502 including a cap portion 504, the mid body portion 506 and the end portion 508. The end portion 508 inserts into an end of the mid body portion 506 located closer to the engine component 204. A spring 510 may be used to interact between a ledge 512 of the end portion 508 and the end of the mid body portion 506 to provide a biasing force therebetween. The end portion 508 defines a channel 514 therethrough through which the elongated member 214 may pass.

The mid body portion 506 defines a channel 516 that aligns with the channel 514 of the end portion 508 through which the elongated member 214 continues to pass. The channel 514 additionally provides space for a bushing 515 within the mid body portion 506 to enable movement of the elongated member 214 back and forth therethrough responsive to movement of the engine component 204. An annular ledge 518 is located at the end of the mid body portion 506 opposite the end portion 508.

The cap portion 504 includes an annular ledge 520 that engages the annular ledge 518 of the mid body portion 506. The cap portion 504 defines an interior chamber 522 in which the measurement plate 216 may move along the central axis 224 of the mechanical follower assembly 500. The measurement plate 216 is biased to a position against the annular ledge 518 of the mid body portion 506 responsive to a spring 526. The proximity probe 218 is inserted into the cap portion 504 through an opening defined in the top of the cap portion 504 and long the central axis 224 of the mechanical follower assembly 500. The proximity probe 218 measures movement of the measurement plate 216 toward and away from the proximity probe responsive to the elongated member 214 moving the measurement plate against the force of the spring 526 responses to movement of the engine component 204 pushing against the elongated member 214. These measurements may then be transmitted from the proximity probe 218 to a controller. The cap portion 504 is connected to the mid body portion 506 using some type of connection means such as a bolt, screw, etc.

Using the mechanical follower assembly 500, the elongated member 214 transmits the motion of the engine component 204 to a location where the proximity probe 218 may detect the movement of the measurement plate 216. By locating the proximity probe 218 in a remote location from the engine component 204 being monitored, a larger sensor for the proximity probe 218 may be used to increase the measurable range of movement while maintaining a small size that needs to penetrate the engine case to enable passage of the elongated member 214. Also, by locating the proximity probe 218 at a more remote location, the thermal effects on movement measurements can be greatly reduced. Thus, the mechanical follower assembly 500 enables proximity measurements to be taken at locations that would otherwise be inaccessible within a gas turbine engine. The elongated member 214 may be sized to fit within an existing engine geometry while the proximity probe 218 and accompanying engine component 204 can be sized for expected motion.

In an alternative embodiment, a thermocouple 530 may be included with the end portion 508. The thermocouple 530 may comprise a metal thermocouple to monitor temperature associated with the elongated member 214 and compensate for thermal expansion of the elongated member. As the geometry is simple, it is possible to establish a relationship between bulk average temperature of the elongated member 214 of the follower assembly 500 vs. the reading from the attached metal thermocouple 530. The software can use the reading from the thermocouple 530 to compensate for temperature-driven changes in elongated member 214 length.

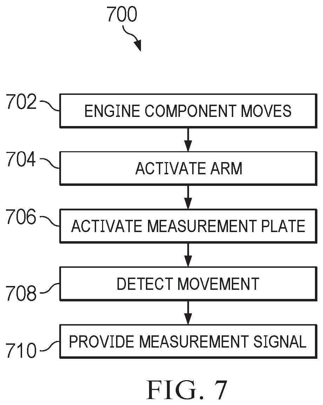

FIGURE 7 illustrates a flow diagram of a system 700 for remote measurement of an engine component 204 movement using the mechanical follower assembly 500. The engine component 204 will move at step 702 at some location within the gas turbine engine. Movement of the engine component 204 actuates movement at step 704 of the elongated member 214 in the same direction as the movement of the engine component 204. Movement of the elongated member 214 actuates movement at step 706 of the measurement plate 216. The movement of the measurement plate 216 is detected at step 708 by the proximity probe 218. The proximity probe 218 will then provide a measurement signal at step 710 responsive to this detected movement.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise", as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present invention should not be read as implying that any particular element, step, or function is an essential or critical element that must be included in the claim scope. The scope of patented subject matter is defined only by the allowed claims.

While this invention has described certain embodiments and generally associated methods, alterations and permutations of these embodiments and methods will be apparent to those skilled in the art. Accordingly, the above description of example embodiments does not define or constrain this invention. Other changes, substitutions, and alterations are also possible without departing from the spirit and scope of this invention, as defined by the following claims.

## Claims

1. An apparatus for performing remote proximity measurements comprising:
a follower mechanism (104;202;500) configured to:
mechanically transmit motion of an engine component (102;204) from a first location associated with the engine component to a second location remotely located from the first location; and
provide an indication of the motion of the engine component (102;204) at the second location; and
a proximity probe (108;218) associated with the second location configured to detect the indication of the motion of the engine component (102;204) at the second location.

2. The apparatus of claim 1, wherein the follower mechanism (104;202;500) comprises:
an elongated member (214) having a first end interfacing with the engine component (102;204) at the first location and a second end associated with the second location; and
a measuring component (216) connected to a second end of the elongated member (214) configured to define at least one surface detectable by the proximity probe (108;218).

3. The apparatus of claim 2, further comprising:
a thermocouple (530) associated with the elongated member (214) configured to detect temperature; and
a controller in signal communication with the proximity probe (108;218) and the thermocouple (530), the controller configured to compensate for changes in length of the elongated member (214) due to changes in temperature as detected by the thermocouple.

4. The apparatus of claim 2 or 3, wherein the measuring component (216) comprises a plate having the at least one surface detectable by the proximity probe (108;218), the at least one surface facing away from the elongated member (214) and perpendicular to a longitudinal axis of the elongated member (214).

5. The apparatus of claim 2 or 3, wherein the measuring component (216) comprises a sloped surface on at least one side thereof, the sloped surface comprising the at least one surface detectable by the proximity probe (108;218), the sloped surface being sloped relative to a longitudinal axis of the elongated member (214).

6. The apparatus of any of claims 2 to 5, wherein the follower mechanism (500) further comprises a housing (502), the housing (502) defining an interior channel (514,516) through which the elongated member (214) is configured to move, the housing (502) further defining an opening configured to receive the proximity probe (218).

7. The apparatus of any preceding claim, wherein the follower mechanism (500) comprises a biasing mechanism (526) configured to bias the pushrod (202) to remain in contact with the engine component (102;204).

8. A method for performing remote proximity measurements comprising:
mechanically transmitting motion of an engine component (102;204) from a first location associated with the engine component (102;204) to a second location remotely located from the first location using a follower mechanism (104;202;500);
providing an indication of motion of the engine component (102;204) at the second location; and
detecting the indication of the motion of the engine component (102;204) at the second location using a proximity probe (108;218),
optionally wherein the step of mechanically transmitting further comprises:
providing the indication of the motion of the engine component at the second location using a pushrod (202); and
biasing the pushrod to remain in contact with the engine component (102;204) using a biasing mechanism (526).

9. The method of claim 8, wherein the step of mechanically transmitting the motion of the engine component further comprises interfacing with the engine component (102;204) at the first location using a first end of an elongated member (214), the elongated member (214) having a second end associated with the second location.

10. The method of claim 9, wherein the step of detecting further comprises detecting a measuring component (216) connected to the second end of the elongated member (214), the measuring component (216) defining at least one surface detectable by the proximity probe (108;218).

11. The method of claim 10, wherein:
the measuring component (216) comprises a plate and the step of detecting further comprises detecting movement of the plate parallel to the elongated member (214), the plate having the at least one surface detectable by the proximity probe (216) facing away from the elongated member (214) and perpendicular to a longitudinal axis of the elongated member (214); or
the step of detecting further comprises detecting movement of a sloped surface on the measuring component (216), the sloped surface being sloped relative to a longitudinal axis of the elongated member (214).

12. The method of any of claims 8 to 11 further comprising mounting the follower mechanism (202) to a gas turbine engine case (208) using a housing (210) surrounding the follower mechanism (202), the housing (210) defining an interior channel (212) through which the follower mechanism (202) may move.

13. A system for performing remote proximity measurements comprising:
the apparatus of any of claims 1 to 7; and
a gas turbine engine including an engine component (102;204) at the first location, the follower mechanism (104;202;500) associated with the gas turbine engine.

14. The system of claim 13, wherein:
the gas turbine engine includes an engine case (208) within which the engine component (102;204) is located; and
the proximity probe (108;218) is located outside of the engine case (208).

15. The system of claim 13 or 14, wherein the follower mechanism (202) is inserted into the gas turbine engine through a borescope probe hole (402).
